# EUROPÄISCHE PATENTANMELDUNG

(11) **EP 3 329 828 A1**
(43) Veröffentlichungstag der Anmeldung: **06.06.2018**
(21) Anmeldenummer: 17201901.0
(22) Anmeldetag: 15.11.2017
(51) Int. Cl.: A47L 15/42, F16L 11/12, F16L 11/20, D06F 39/08, F16L 11/118, F16L 11/127

(54) **SCHLAUCHVORRICHTUNG ZUM SENSIEREN EINER UNDICHTIGKEIT, HAUSHALTGERÄT MIT EINER SCHLAUCHVORRICHTUNG UND VERFAHREN ZUM BETREIBEN EINER SCHLAUCHVORRICHTUNG**

(30) Priorität: 02.12.2016 DE 102016123319
(71) Anmelder: Miele & Cie. KG, 33332 Gütersloh (DE)
(72) Erfinder: Sieding, Dirk, 44534 Lünen (DE); Ewers, Christian, 33129 Delbrück (DE); Zielke, Marcel, 59320 Ennigerloh (DE)

(57) **Zusammenfassung**

Der hier vorgestellte Ansatz betrifft eine Schlauchvorrichtung (105) für ein Haushaltgerät (100). Die Schlauchvorrichtung (105) ist dazu ausgebildet, um eine Undichtigkeit zu sensieren, beispielsweise eine Leckage des Haushaltgeräts (100). Die Schlauchvorrichtung (105) weist hierzu zumindest einen Innenschlauch (115) und einen Außenschlauch (120) auf. Der Innenschlauch (115) ist dazu ausgebildet, um zumindest ein Fluid zu führen. Der Außenschlauch (120) ist zumindest teilweise um den Innenschlauch (115) angeordnet und dazu ausgeformt, um ein aus dem Innenschlauch (115) tretendes oder ausgetretenes Fluid aufzunehmen und sensierbar zu machen.

## Beschreibung

Der hier vorgestellte Ansatz betrifft eine Schlauchvorrichtung für ein Haushaltgerät zum Sensieren einer Undichtigkeit, ein Haushaltgerät mit einer Schlauchvorrichtung und ein Verfahren zum Betreiben einer Schlauchvorrichtung.

Bei Haushaltgeräten mit einer Wasserabführung kann es zu Leckagen durch den Ablaufschlauch kommen. Der Ablaufschlauch kann durch starke mechanische Beanspruchung, beispielsweise Biegung, Vibration, Alterung und/oder Reibung etc. beschädigt werden. Diese Beschädigung kann dazu führen, dass Wasser beim Abpumpen aus dem Ablaufschlauch austreten kann.

Dem hier vorgestellten Ansatz liegt die Aufgabe zugrunde, eine verbesserte Schlauchvorrichtung zum Sensieren einer Undichtigkeit, ein verbessertes Haushaltgerät mit einer Schlauchvorrichtung sowie ein Verfahren zum Betreiben einer verbesserten Schlauchvorrichtung zu schaffen.

Erfindungsgemäß wird diese Aufgabe durch eine Schlauchvorrichtung für ein Haushaltgerät zum Sensieren einer Undichtigkeit, ferner ein Haushaltgerät mit einer Schlauchvorrichtung und schließlich ein Verfahren zum Betreiben einer Schlauchvorrichtung mit den Merkmalen bzw. Schritten der Hauptansprüche gelöst. Gegenstand des vorliegenden Ansatzes ist auch ein Computerprogramm. Vorteilhafte Ausgestaltungen und Weiterbildungen des Ansatzes ergeben sich aus den nachfolgenden Unteransprüchen.

Die mit dem hier vorgestellten Ansatz erreichbaren Vorteile bestehen darin, dass unter Verwendung der Schlauchvorrichtung eine an dem Haushaltgerät auftretende Leckage schnell erkannt werden kann.

Eine Schlauchvorrichtung für ein Haushaltgerät ist dazu ausgebildet, um die Undichtigkeit, beispielsweise eine Leckage des Haushaltgeräts, zu sensieren. Die Schlauchvorrichtung weist hierzu zumindest einen Innenschlauch und einen Außenschlauch auf. Der Innenschlauch ist dazu ausgebildet, um zumindest ein Fluid zu führen. Der Außenschlauch ist zumindest teilweise um den Innenschlauch angeordnet und dazu ausgeformt, um ein aus dem Innenschlauch tretendes oder ausgetretenes Fluid aufzunehmen und sensierbar zu machen. Wenn das aus dem Innenschlauch austretende oder ausgetretene Fluid in den Außenschlauch aufgenommen wird, kann es durch diesen vorteilhafterweise abgefangen werden, damit kein Fluid unkontrolliert von dem Innenrohr herabtropft. Der Außenschlauch kann zudem dazu dienen, um das Fluid in einen Bereich, beispielsweise in eine Abtropfschale des Haushaltgeräts zu leiten, in dem es im Folgenden sensiert werden kann.

Der Innenschlauch kann beispielsweise als ein Ablaufschlauch zum Abführen des Fluids von dem Haushaltgerät in einen Abfluss ausgeformt sein. Somit kann der Innenschlauch dazu ausgeformt sein, um zwischen dem Haushaltgerät und dem Abfluss angeordnet zu werden. Bei einem Abpumpen von Wasser in Haushaltgeräten, die Wasser nutzen, werden Ablaufschläuche mechanisch stark beansprucht, wodurch es schnell zu Leckagen der Ablaufschläuche kommen kann. Aus diesem Grund ist es von Vorteil insbesondere Ablaufschläuche wie beschrieben auszuführen, um Wasserschäden im Haushalt zu vermeiden.

Der Außenschlauch kann zumindest einen Verbindungsabschnitt aufweisen, der dazu ausgeformt ist, um den Außenschlauch fluidisch mit dem Haushaltgerät zu verbinden, wenn die Schlauchvorrichtung an dem Haushaltgerät angeordnet ist. Der hier vorgestellte Verbindungsabschnitt kann einen offenen Eingang zu dem Haushaltgerät ermöglichen, um das ausgetretene Fluid wieder in das Haushaltgerät zurückführbar zu machen. Hierbei kann der Verbindungsabschnitt beispielsweise auf einer dem Haushaltgerät zugewandten Seite des Außenschlauchs angeordnet sein.

Wenn der Verbindungsabschnitt gemäß einer vorteilhaften Ausführungsform der Schlauchvorrichtung eine Schnittstelle zu einer Bodenwanne des Haushaltgeräts aufweist, kann das aus dem Innenschlauch tretende Fluid in die Bodenwanne des Haushaltgeräts geleitet werden, wenn der Verbindungsabschnitt mit der Schnittstelle verbunden ist. In der Bodenwanne kann das Fluid sicher bevorratet werden.

Es ist weiterhin von Vorteil, wenn die Schlauchvorrichtung einen in der Bodenwanne des Haushaltgeräts anordenbaren Schwimmerschalter aufweist, der dazu ausgebildet ist, um ansprechend auf ein Sensieren eines in die Bodenwanne des Haushaltgeräts geleiteten Fluids, ein Sensiersignal auszugeben, das das undichte Haushaltgerät repräsentiert. Ein solcher Schwimmschalter kann dazu dienen, dass das Haushaltgerät schnell als undicht identifiziert werden kann. Hierbei kann der Schwimmschalter dazu ausgebildet sein, um ansprechend auf ein Sensieren des durch den Verbindungsabschnitt in die Bodenwanne des Haushaltgeräts geleiteten Fluids das Sensiersignal auszugeben, um speziell das durch den Innenschlauch über den Außenschlauch in die Bodenwanne geströmte Fluid zu identifizieren und dadurch einen Rückschluss auf einen undichten Innenschlauch zu ermöglichen.

Wenn der Außenschlauch zumindest einen Verschlussabschnitt aufweist, der dazu ausgeformt ist, um einen Zwischenraum zwischen dem Außenschlauch und dem Innenschlauch gegenüber dem Abfluss abzudichten, kann durch den Innenschlauch getretenes Fluid vorteilhafterweise nicht in den Abfluss fließen. Würde dies geschehen, bliebe ein gerissener Innenschlauch unentdeckt.

Von Vorteil ist es auch, wenn ein Flexibilitätsgrad des Außenschlauchs höher ist, als ein weiterer Flexibilitätsgrad des Innenschlauchs. Dies kann einem Reißen des Außenschlauchs vorbeugen.

Die Schlauchvorrichtung kann zumindest einen Strom leitfähigen Draht aufweisen, der dazu ausgeformt ist, um ansprechend auf ein Reißen zumindest des Innenschlauchs ebenfalls zu reißen. Wenn der Draht durch eine Steuerung des Haushaltgeräts, über beispielsweise den offenen Eingang, auf Durchgang überprüft wird, kann die Steuerung ansprechend auf das Reißen des Drahts ein hochohmiges Messergebnis erfassen, das eine Lokalisierung eines Risses des Drahts ermöglicht. So kann ansprechend auf einen erkannten Riss in dem Draht der gerissene Innenschlauch identifiziert werden. Der Draht kann hierbei in oder an zumindest einem aus Kunststoff ausgeformten Abschnitt des Innenschlauchs angeordnet sein. Der Draht kann auch als ein Drahtgeflecht ausgeformt sein, das in den Kunststoff des Innenschlauchs eingegossen oder an dem Kunststoff befestigt ist.

Um den gerissenen Innenschlauch für einen Benutzer erkennbar zu machen, kann die Schlauchvorrichtung vorteilhafterweise dazu ausgebildet sein, um ansprechend auf das Reißen des Drahts ein Drahtsignal auszugeben, das die undichte Schlauchvorrichtung repräsentiert. Hierzu kann die Schlauchvorrichtung dazu ausgebildet sein, um ansprechend auf das Drahtsignal und/oder das Sensiersignal ein Warnsignal zur optischen Anzeige an eine Anzeigeeinrichtung und/oder akustischen Ausgabe an eine Ausgabeeinrichtung des Haushaltgeräts bereitzustellen. Dies kann verhindern, dass ein gerissener Innenschlauch unentdeckt bleibt.

Ein Haushaltgerät weist eine der vorgestellten Schlauchvorrichtungen auf. Die Schlauchvorrichtung kann zumindest teilweise zwischen dem Haushaltgerät und einem Abfluss angeordnet sein. Ein hier vorgestelltes Haushaltgerät kann als Ersatz für bekannte Haushaltgeräte dienen, wobei das vorgestellte Haushaltgerät vorteilhafterweise die bereits beschriebenen Vorteile der Schlauchvorrichtung realisiert.

Ein Verfahren zum Betreiben einer der beschriebenen Schlauchvorrichtungen mit dem Schwimmerschalter umfasst zumindest die folgenden Schritte:
Einlesen des Sensiersignals des Schwimmerschalters; und
Bereitstellen des Warnsignals unter Verwendung des Sensiersignals.

Dieses Verfahren kann unter Verwendung der zuvor vorgestellten Schlauchvorrichtung, beispielsweise durch ein Steuergerät der Schlauchvorrichtung, ausführbar sein. Auch durch ein solches Verfahren können die bereits beschriebenen Vorteile der Schlauchvorrichtung technisch einfach und kostengünstig realisiert werden.

Der hier vorgestellte Ansatz schafft ferner ein Steuergerät, das ausgebildet ist, um die Schritte des hier vorgestellten Verfahrens in entsprechenden Einrichtungen durchzuführen, anzusteuern bzw. umzusetzen. Auch durch diese Ausführungsvariante des Ansatzes in Form eines Steuergeräts kann die dem Ansatz zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch das Steuergerät eine Steuerung zumindest eines Warnsignals. Hierzu kann das Steuergerät beispielsweise auf Sensorsignale wie zumindest ein Sensiersignal zugreifen. Die Ansteuerung erfolgt zumindest über Aktoren wie eine Einleseeinrichtung zum Einlesen des Sensiersignals und eine Bereitstellungseinrichtung zum Bereitstellen des Warnsignals.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des Ansatzes sind in den Zeichnungen rein schematisch dargestellt und werden nachfolgend näher beschrieben. Es zeigt
- Figur 1: eine schematische Darstellung eines Haushaltgeräts mit einer Schlauchvorrichtung gemäß einem Ausführungsbeispiel;
- Figur 2: ein Ablaufdiagramm eines Verfahrens zum Betreiben einer Schlauchvorrichtung gemäß einem Ausführungsbeispiel; und
- Figur 3: ein Ablaufdiagramm eines Verfahrens zum Betreiben einer Schlauchvorrichtung gemäß einem Ausführungsbeispiel.

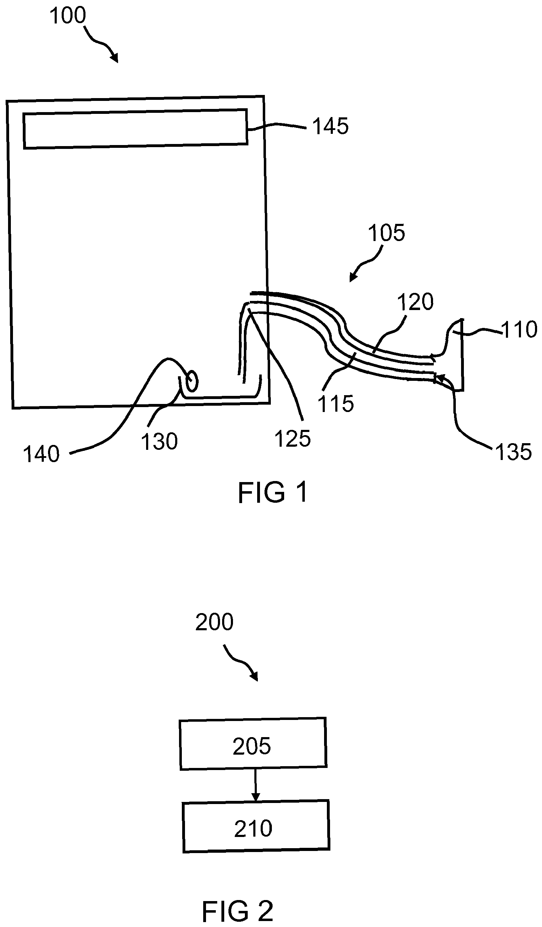

Figur 1 zeigt eine schematische Darstellung eines Haushaltgeräts 100 mit einer Schlauchvorrichtung 105 gemäß einem Ausführungsbeispiel. Das Haushaltgerät ist gemäß diesem Ausführungsbeispiel eine Waschmaschine oder ein Geschirrspüler. Gemäß diesem Ausführungsbeispiel weist das Haushaltgerät 100 die Schlauchvorrichtung 105 auf, die zumindest teilweise zwischen dem Haushaltgerät 100 und einem Abfluss 110 angeordnet ist. Die Schlauchvorrichtung 105 ist dazu ausgebildet, um zumindest das undichte Haushaltgerät 100 zu sensieren. Hierzu weist die Schlauchvorrichtung 105 zumindest einen Innenschlauch 115 und einen Außenschlauch 120 auf. Der Innenschlauch 115 ist dazu ausgeformt, um zumindest ein Fluid zu führen. Gemäß diesem Ausführungsbeispiel ist der Innenschlauch 115 als ein Ablaufschlauch ausgeformt, der dazu ausgebildet ist, um das Fluid von dem Haushaltgerät 100 zu dem Abfluss 110 abzuführen. Der Außenschlauch 120 ist zumindest teilweise um den Innenschlauch 115 angeordnet und dazu ausgeformt, um ein aus dem Innenschlauch 115 austretendes oder ausgetretenes Fluid aufzunehmen und sensierbar zu machen.

Die folgenden Merkmale der Schlauchvorrichtung 105 sind optional. Gemäß diesem Ausführungsbeispiel weist der Außenschlauch 120 einen Verbindungsabschnitt 125 auf, der den Außenschlauch 120 fluidisch mit dem Haushaltgerät 100 verbindet. Der Verbindungsabschnitt 125 weist eine Schnittstelle zu einer Bodenwanne 130 des Haushaltgeräts 100 auf, um das aus dem Innenschlauch 115 tretende Fluid über den Außenschlauch 120 in die Bodenwanne 130 des Haushaltgeräts 100 zu leiten, wenn der Verbindungsabschnitt 125 wie hier dargestellt mit der Schnittstelle verbunden ist. Gemäß diesem Ausführungsbeispiel weist der Außenschlauch 120 zudem zumindest einen Verschlussabschnitt 135 auf, der einen Zwischenraum zwischen dem Außenschlauch 120 und dem Innenschlauch 115 gegenüber dem Abfluss 110 abdichtet.

Die Schlauchvorrichtung 105 weist gemäß diesem Ausführungsbeispiel einen in der Bodenwanne 130 des Haushaltgeräts 100 angeordneten Schwimmerschalter 140 auf, der dazu ausgebildet ist, um ansprechend auf ein Sensieren eines in die Bodenwanne 130 des Haushaltgeräts 100 geleiteten Fluids, ein Sensiersignal auszugeben, das das undichte Haushaltgerät 100 repräsentiert.

Im Folgenden werden Ausführungsbeispiele anhand der Figur 1 nochmals näher beschrieben:

Die hier vorgestellte Schlauchvorrichtung 105 ist durch den Innenschlauch 115 und den Außenschlauch 120 doppelwandig ausgelegt. Die Schlauchvorrichtung 105 kann demnach auch als ein doppelwandiger Ablaufschlauch zur Leckagesensierung oder als ein Ablaufschlauch zur doppelten Absicherung gegen Leckagen bezeichnet werden. Der in dem Außenschlauch 120 angeordnete Innenschlauch 115 dient zur Abführung von Abwasser und der Außenschlauch 120 zur Sensierung der Leckage. Der Außenschlauch 120 weist durch den Verbindungsabschnitt 125 geräteseitig einen offenen Eingang zum Haushaltgerät 100 auf. Ablaufseitig weist der Außenschlauch 120 durch den Verschlussabschnitt 135 einen Verschluss zum Innenschlauch 110 auf. Ein Material des Außenschlauchs 120 besitzt einen höheren Flexibilitätsgrad als ein Material des Innenschlauchs 115.

Ein durch eine Leckage im Innenschlauch 115 tretendes Fluid wird durch den Außenschlauch 120 in ein Inneres des Haushaltgeräts 100 zurückgeleitet. Dort wird der Fehler wie beschrieben über die Bodenwanne 130 und den Schwimmerschalter 140 erkannt und es kommt durch das Sensiersignal zu einer Fehlermeldung "Gerät undicht". Hierzu ist die Schlauchvorrichtung 105 gemäß diesem Ausführungsbeispiel dazu ausgebildet, um ansprechend auf das Sensiersignal ein Warnsignal zur optischen Anzeige der Fehlermeldung "Gerät undicht" an eine Anzeigeeinrichtung 145 des Haushaltgeräts 100 bereitzustellen und/oder gemäß einem alternativen Ausführungsbeispiel zur akustischen Ausgabe an eine Ausgabeeinrichtung des Haushaltgeräts 100 bereitzustellen.

Die beschriebene Fehlermeldung kann einen erkannten Schaden jedoch noch nicht als den Schaden an dem Innenschlauch 115 lokalisieren - durch eine erweiterte Maßnahme kann eine Lokalisierung erfolgen: Gemäß diesem Ausführungsbeispiel ist in einen Kunststoff des Innenschlauchs 115 ein Strom leitender Draht oder Drahtgeflecht eingegossen bzw. befestigt. Dieser wird durch den offenen Eingang zu dem Haushaltgerät 100 ständig von einer Steuerung auf Durchgang geprüft. Durch die mechanische Beanspruchung des Innenschlauchs 115 reißt ansprechend auf ein Reißen des Innenschlauchs auch der Draht, dies führt zu einem hochohmigen Messergebnis.

Ansprechend auf das Reißen des Drahts oder auf das Messergebnis ist die Schlauchvorrichtung 105 gemäß diesem Ausführungsbeispiel dazu ausgebildet, um ein Drahtsignal auszugeben, das die undichte Schlauchvorrichtung 105 repräsentiert. Hierzu ist die Schlauchvorrichtung 105 dazu ausgebildet, um ansprechend auf das Drahtsignal ein weiteres Warnsignal zur optischen Anzeige einer weiteren Fehlermeldung "Ablauf undicht" an die Anzeigeeinrichtung 145 bereitzustellen oder gemäß einem alternativen Ausführungsbeispiel zur akustischen Ausgabe an eine Ausgabeeinrichtung des Haushaltgeräts 100 bereitzustellen.

Die hier vorgestellte Schlauchvorrichtung 105 verhindert vorteilhafterweise, dass eine Leckage im Ablaufschlauch in Form des Innenschlauchs 115 zu einem Wasserschaden in einem Haushalt führt. Schleichende Leckagen werden früh erkannt und führen zu keinen nachhaltigen Schäden. Dem Bediener wird ein Hinweis über die Fehlerursache im Display der Anzeigeeinrichtung 145 mitgeteilt. Weiterhin können Prämien für eine Gebäude- und Hausratsversicherung aufgrund der verbesserten Schlauchvorrichtung 105, die auch als Wasserschutzeinrichtung bezeichnet werden kann, für den Benutzer reduziert werden.

Gemäß einer weiteren hier nicht gezeigten Ausführungsform können Überwachungsdrähte zwischen Innenschlauch und Außenschlauch verlegt sein. Wenn sie bei einer Leckage nicht reißen, kommen sie mit dem auslaufenden Wasser in Berührung. Das Wasser verursacht einen Kurzschluss zwischen den beiden Drähten. Die Überwachung kann beispielsweise über eine Elektronik, zB als Niederohmigkeitsprüfung, erfolgen.

Figur 2 zeigt ein Ablaufdiagramm eines Verfahrens 200 zum Betreiben einer Schlauchvorrichtung gemäß einem Ausführungsbeispiel. Dabei kann es sich um ein Verfahren 200 zum Betreiben der anhand von Figur 1 beschreiben Schlauchvorrichtung mit dem Schwimmschalter handeln. Das Verfahren 200 ist durch ein entsprechendes Steuergerät zum Betreiben der Schlauchvorrichtung ausführbar. Das Verfahren 200 weist zumindest einen Schritt 205 des Einlesens und einen Schritt 210 des Bereitstellens auf. Im Schritt 205 des Einlesens wird das Sensiersignal des Schwimmerschalters eingelesen. Im Schritt 210 des Bereitstellens wird das Warnsignal unter Verwendung des Sensiersignals bereitgestellt.

Die hier vorgestellten Verfahrensschritte können wiederholt sowie in einer anderen als in der beschriebenen Reihenfolge ausgeführt werden.

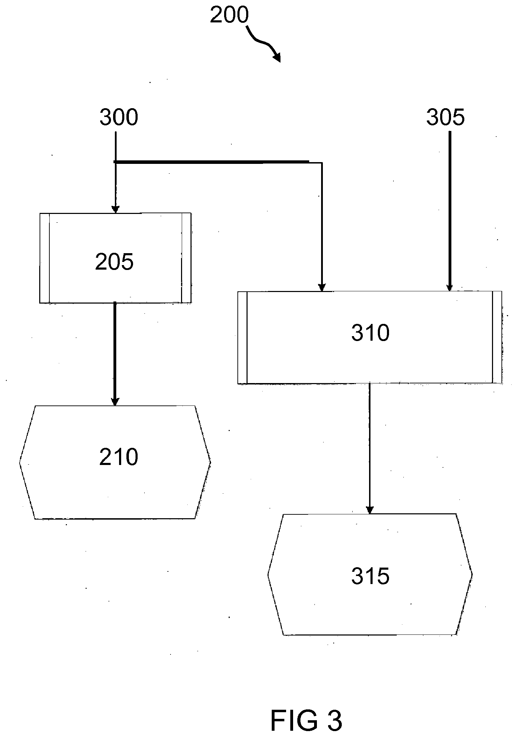

Figur 3 zeigt ein Ablaufdiagramm eines Verfahrens 200 zum Betreiben einer Schlauchvorrichtung gemäß einem Ausführungsbeispiel. Dabei kann es sich um das anhand von Figur 2 beschriebene Verfahren 200 mit zusätzlichen Schritten handeln.

In einem Schritt 300 des Empfangens wird ein Bereitstellungssignal des Schwimmschalters empfangen. In einem Schritt 305 des Überprüfens wird ein Überprüfungssignal eines Sensors des Drahts, hier eines Widerstandsdrahts, der Schlauchvorrichtung eingelesen. In einem Schritt 310 des weiteren Einlesens wird das Drahtsignal eingelesen, das den gerissenen Draht und somit die undichte Schlauchvorrichtung repräsentiert. In einem Schritt 315 des weiteren Bereitstellens wird das weitere Warnsignal bereitgestellt. Gemäß diesem Ausführungsbeispiel wird das weitere Warnsignal ansprechend auf den Schritt 205 des Einlesens und den Schritt 310 des weiteren Einlesens bereitgestellt.

Durch eine hier vorgestellte Kombination aus Schwimmerschalter und hochohmiger Messung ist eine exakte Lokalisierung des Fehlers möglich. Die Fehlermeldung "Gerät undicht" wird gemäß diesem Ausführungsbeispiel in der Anzeigeeinrichtung ansprechend auf den Schritt 315 des weiteren Bereitstellens zu der weiteren Fehlermeldung "Ablauf undicht" präzisiert.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Schlauchvorrichtung (105) für ein Haushaltgerät (100) zum Sensieren einer Undichtigkeit, wobei die Schlauchvorrichtung (105) zumindest die folgenden Merkmale umfasst:
einen Innenschlauch (115) zum Führen zumindest eines Fluids; und
einen zumindest teilweise um den Innenschlauch (115) angeordneten Außenschlauch (120), der dazu ausgeformt ist, um ein aus dem Innenschlauch (115) tretendes oder ausgetretenes Fluid aufzunehmen und sensierbar zu machen.

2. Schlauchvorrichtung (105) gemäß Anspruch 1, bei dem der Innenschlauch (115) als ein Ablaufschlauch zum Abführen des Fluids von dem Haushaltgerät (100) in einen Abfluss (110) ausgeformt ist.

3. Schlauchvorrichtung (105) gemäß einem der vorangegangenen Ansprüche, bei der der Außenschlauch (120) zumindest einen Verbindungsabschnitt (125) aufweist, der dazu ausgeformt ist, um den Außenschlauch (120) fluidisch mit dem Haushaltgerät (100) zu verbinden, wenn die Schlauchvorrichtung (105) an dem Haushaltgerät (100) angeordnet ist.

4. Schlauchvorrichtung (105) gemäß Anspruch 3, bei der der Verbindungsabschnitt (125) eine Schnittstelle zu einer Bodenwanne (130) des Haushaltgeräts (100) aufweist, um das aus dem Innenschlauch (115) tretende Fluid in die Bodenwanne (130) des Haushaltgeräts (100) zu leiten, wenn der Verbindungsabschnitt (125) mit der Schnittstelle verbunden ist.

5. Schlauchvorrichtung (105) gemäß Anspruch 4, mit einem in der Bodenwanne (130) des Haushaltgeräts (100) anordenbaren Schwimmerschalter (140), der dazu ausgebildet ist, um ansprechend auf ein Sensieren eines in die Bodenwanne (130) des Haushaltgeräts (100) geleiteten Fluids, ein Sensiersignal auszugeben, das die Undichtigkeit anzeigt.

6. Schlauchvorrichtung (105) gemäß einem der Ansprüche 2 bis 5, bei der der Außenschlauch (120) zumindest einen Verschlussabschnitt (135) aufweist, der dazu ausgeformt ist, um einen Zwischenraum zwischen dem Außenschlauch (120) und dem Innenschlauch (115) gegenüber dem Abfluss (110) abzudichten.

7. Schlauchvorrichtung (105) gemäß einem der vorangegangenen Ansprüche, bei der ein Flexibilitätsgrad des Außenschlauchs (120) höher ist, als ein weiterer Flexibilitätsgrad des Innenschlauchs (115).

8. Schlauchvorrichtung (105) gemäß einem der vorangegangenen Ansprüche, die zumindest einen Strom leitfähigen Draht aufweist, der dazu ausgeformt ist, um ansprechend auf ein Reißen zumindest des Innenschlauchs (115) ebenfalls zu reißen.

9. Schlauchvorrichtung (105) gemäß Anspruch 8, bei der der Draht zumindest in oder an einem aus Kunststoff ausgeformten Abschnitt des Innenschlauchs (115) angeordnet ist.

10. Schlauchvorrichtung (105) gemäß einem der Ansprüche 8 bis 9, die dazu ausgebildet ist, um ansprechend auf ein Reißen des Drahts ein Drahtsignal auszugeben, das die Undichtigkeit anzeigt.

11. Schlauchvorrichtung (105) gemäß Anspruch 10, die dazu ausgebildet ist, um ansprechend auf das Drahtsignal und/oder das Sensiersignal ein Warnsignal zur optischen Anzeige an eine Anzeigeeinrichtung (145) und/oder akustischen Ausgabe an eine Ausgabeeinrichtung des Haushaltgeräts (100) bereitzustellen.

12. Haushaltgerät (100) mit einer Schlauchvorrichtung (105) gemäß einem der vorangegangenen Ansprüche.

13. Verfahren (200) zum Betreiben einer Schlauchvorrichtung (105) gemäß einem der Ansprüche 5 bis 11, wobei das Verfahren (200) zumindest die folgenden Schritte umfasst:
Einlesen (205) des Sensiersignals des Schwimmerschalters (140); und
Bereitstellen (210) des Warnsignals unter Verwendung des Sensiersignals.
